# EUROPEAN PATENT SPECIFICATION

(11) **EP 2 526 236 B1**
(45) Date of publication and mention of the grant of the patent: **01.07.2015**
(21) Application number: 11703272.2
(22) Date of filing: 20.01.2011
(51) Int. Cl.: F24F 13/22, F24D 3/16, E04B 9/04, E04C 2/52

(54) **MODULAR UTILITY SERVICE SYSTEM**
MODULARES VERSORGUNGSLEISTUNGSYSTEM
SYSTEME DE SERVICES D'UTILITE MODULAIRE

(30) Priority: 20.01.2010 NL 2004119; 20.01.2010 NL 2004118
(43) Date of publication of application: 28.11.2012
(73) Proprietor: Jansen Molenhoek Beheer B.V., 6584 GP Molenhoek (NL)
(72) Inventor: JANSEN, Hendrikus Wilhelmus, NL-6584 GP Molenhoek (NL)
(74) Representative: EP&C
(86) International application number: PCT/NL2011/050035
(87) International publication number: WO 2011/090378

(56) References cited:
- EP-A2- 0 971 177
- WO-A1-2007/042331
- WO-A1-2008/056386
- DE-U1-202009 003 205
- GB-A- 2 166 466
- JP-A- 2003 293 517

## Description

The invention relates to a utility service system for installation on a ceiling of a building. Said utility service system comprises multiple fluid ducts for transporting a fluid and in general at least one electricity line for transporting electricity. WO2007/042331, GB2166466, JP2003293517 and WO200/056386 disclose modules with fluid ducts. WO2007/042331 discloses a module according to the preamble of claim 1.

A problem of the known utility service systems is that it takes a lot of time and effort to install the utility service system on a ceiling. Said utility service systems are often used in buildings with a high rent, such as shops in famous shopping streets or offices in famous business areas. Therefore, the installation of the utility service system must be performed as fast as possible. During the time that the installation takes place, the building (e.g. shop or office) can not be used for its original purpose. This means that each hour saved during the installation time results provides a large economical benefit.

The object of the invention is to provide an improved utility service system. This object is reached by a module for constructing a utility service system to be installed on a ceiling of a building, comprising multiple fluid ducts for transporting a fluid, two longitudinal supports extending substantially parallel at a distance from each other, and at least one transverse support being supported by the longitudinal supports and extending traverse to the longitudinal supports, wherein the multiple fluid ducts extend substantially parallel to the longitudinal supports, the multiple fluid ducts are supported by the at least one transverse support, the multiple fluid ducts are embedded in a body of thermally insulating foam, and the at least one transverse support does not form part of the body of foam.

The module according the invention allows to install a utility service system in an improved manner on a ceiling of a building.

The module may comprise at least one electricity line for transporting electricity, which at least one electricity line may extend substantially parallel to the longitudinal supports. The module may be produced and sold by a first party and a second party may add the at least one electricity line to provide a utility service system in accordance with client specifications.

In an embodiment of the module according the invention, the multiple fluid ducts are embedded in the same body of thermally insulating foam.

In an embodiment of the module according the invention, the at least one electricity line is embedded in the body of thermally insulating foam.

The body of foam may fully surrounds the length axes of the fluid ducts.

The body of foam may be connected to the longitudinal supports.

Each longitudinal support may be located at an outer side of the body of foam.

Each longitudinal support may be partly surrounded by the body of foam.

The longitudinal supports may around their length axis only be partly (and not fully) surrounded by the body of foam.

The longitudinal supports may be configured to be engaged by a holding device for attaching the module to the ceiling.

The longitudinal supports may be configured to provide support for an item being connected to the module such that the item suspends from the module.

The longitudinal supports may be configured to transport electricity. This way the longitudinal supports may be used to supply electricity to electrical devices, such as a lamp. Said electrical devices may be connected to the longitudinal supports.

The module may comprise at least one fluid duct configured for transporting a cold fluid. Said at least one fluid duct may for example be used for an air conditioning device or as a cold water supply.

The module may comprise at least one fluid duct configured for transporting a hot fluid. Said at least one fluid duct may for example be used for an air conditioning device or as a hot water supply.

The module may comprise at least one fluid duct for transporting a gas. Said at least one fluid duct may for example be used as a natural gas supply.

The module may comprise at least one fluid duct for transporting a liquid. Said at least one fluid duct may for example be used as a water supply or drain.

The module may comprise multiple electricity lines. This allows the utility service system to provide a larger electrical power.

The module may comprise at least one communication line from transporting data. This allows the utility service system to be coupled to a communication network.

The fluid ducts may in their length direction extend beyond at least one side of the body of foam. The fluid ducts may in their length direction extend beyond at two opposite sides of the body of foam. The fluid ducts may in their length direction extend beyond the front side and the back side of the module.

The foam may be made from polyurethane. Alternatively, foam made from PIR, EPS or XPS may be used.

The invention relates to a utility service system comprising multiple interconnected modules according to the invention.

The fluid ducts of the modules may be interconnected. The at least one electricity line of the modules may be interconnected. The at least one communication line of the modules may be interconnected.

The connections of the fluid ducts of neighbouring modules may be surrounded by a thermally insulating cover. The connections of the at least one electricity line of neighbouring modules may be surrounded by the thermally insulating cover. The connections of the at least one communication line of neighbouring modules may be surrounded by the thermally insulating cover.

The connections of the fluid ducts of neighbouring modules may comprise branch connections for transporting the fluids away and/or to the neighbouring modules. The connections of the at least one the electricity lines of neighbouring modules may comprise branch connections for transporting the electricity away and/or to the neighbouring modules. The connections of the at least one the communication lines of neighbouring modules may comprise a branch connection for transporting the data away and/or to the neighbouring modules. A branch module may be connected to the branch connections.

The invention relates to a method for producing a module for constructing a utility service system to be installed on a ceiling of a building, comprising the steps of;
- providing two longitudinal supports extending substantially parallel at a distance from each other,
- placing at least one transverse support in contact with the longitudinal supports such that the at least one transverse support is supported by the longitudinal supports and extends traverse to the longitudinal supports,
- placing multiple fluid ducts for transporting a fluid in contact with the at least one transverse support such that the fluid ducts supported by the at least one transverse support and extend substantially parallel to the two longitudinal supports,
- embedding the multiple fluid ducts in a body of thermally insulating foam, wherein the at least one transverse support does not form part of the body of foam.

More specifically, the method comprises embedding the multiple fluid ducts in the same body of thermally insulating foam.

In an embodiment of the method according the invention, the method comprises embedding at least one electricity line for transporting electricity in the body of thermally insulating foam.

The method may comprise surrounding the multiple fluid ducts by a mould and filling the mould with thermally insulating foam to form the body of foam which fully surrounds the length axes of the multiple fluid ducts.

The method may comprise forming the body of foam such that said body of foam is connected to the longitudinal supports.

The method may comprise forming the body of foam such that the two longitudinal supports are located at outer sides of the module.

The method may comprise forming of the body of foam such that the fluid ducts in their length direction extend beyond at least one side of the body of foam. The method may comprise forming of the body of foam such that the fluid ducts in their length direction extend beyond two opposite sides of the body of foam. The method may comprise forming of the body of foam such that the fluid ducts in their length direction extend beyond the front side and back side of the module.

The method may comprise forming the body of foam with polyurethane.

The method may comprise embedding at least one communication line for transporting data in the body of thermally insulating foam.

The invention relates to a method for constructing a utility service system to be installed on a ceiling of a building, comprising the steps of interconnecting modules according to the invention.

The method may comprise interconnecting the fluid ducts of the modules. The method may comprise interconnecting the at least one electricity lines of the modules. The method may comprise interconnecting the communication lines the of the modules.

The method may comprise surrounding the interconnections of the fluid ducts of neighbouring modules by a thermally insulating cover. The method may comprise surrounding the interconnections of at least one electricity lines of neighbouring modules by a thermally insulating cover. The method may comprise surrounding the at least one communication line of neighbouring modules by a thermally insulating cover.

The method may comprise connecting a branch module to the branch connections.

The method may comprise installing the interconnected modules on the ceiling.

The invention relates to a method for installing a utility service system on a ceiling of a building comprising the steps of;
- providing multiple modules according the invention,
- mounting holding devices on the ceiling, which holding devices are configured to hold the modules,
- interconnecting the modules while the modules are supported by a floor surface of the building,
- lifting the interconnected modules to the holding devices, and
- engaging the interconnected modules with the holding devices such that the interconnected modules are attached to the ceiling.

The provided modules may comprise at least one electricity line for transporting electricity, which at least one electricity line extends substantially parallel to the module length axis.

The method may comprise interconnecting the modules while said modules are being supported by the floor surface via a positioning system such that the modules are located at a distance D1 from the floor surface. The method may comprise adjusting the distance D1 with the positioning system. The method may comprise adjusting the distance D1 between 30 - 120 cm.

The positioning system may comprise lifting devices and the method may comprise lifting the interconnected modules to the holding devices while being supported by the positioning system. During the lifting of the interconnected modules the positioning system may be attached to the holding devices. Each of the lifting devices may comprise lifting lines for attachment to at least one of the holding devices and a drivable reel for reeling in and out the lifting lines and the method may comprise attaching the lifting lines to the holding devices and reeling the lifting lines in such that the positioning system carrying the interconnected modules is lifted to the holding devices.

Each of the holding devices may comprise movable engaging arms and the method may comprise moving the engaging arms such that the arms engage the interconnected modules to hold the interconnected modules.

Each module may comprise two longitudinal supports extending substantially parallel at a distance from each other, and at least one transverse support being supported by the longitudinal supports and extending traverse to the longitudinal supports. The multiple fluid ducts may extend substantially parallel to the longitudinal supports. The multiple fluid ducts may be supported by the at least one transverse support, and the method may comprise engaging the interconnected modules with the holding devices at the longitudinal supports.

The at least one electricity line may extend substantially parallel to the longitudinal supports.

The invention also relates to a module for constructing a utility service system to be installed on a ceiling of a building, comprising multiple fluid ducts for transporting a fluid, two longitudinal supports extending substantially parallel at a distance from each other, at least one transverse support being supported by the longitudinal supports and extending traverse to the longitudinal supports, wherein the multiple fluid ducts extend substantially parallel to the longitudinal supports, the multiple fluid ducts are supported by the at least one transverse support, and the multiple fluid ducts are embedded in a body of thermally insulating foam. Said module may be provided with at least one electricity line for transporting electricity.

Embodiments of the invention will be further explained in detail with reference to the accompanying figures, wherein;
Fig. 1 schematically shows a view in perspective of a first embodiment of a module according the invention,
Fig. 2 shows the module of fig. 1 wherein the body of foam is removed,
Fig. 3 and 4 schematically show views in perspective of a second embodiment of a module according the invention,
Fig. 5-11 schematically show views in perspective of an embodiment of a method for producing a module according the invention.
Fig. 12 and 13 schematically show views in perspective of an embodiment method for constructing a utility service system according the invention.
Fig. 14-20 schematically show views in perspective of an embodiment of a method for installing a utility service system on a ceiling of a building according the invention.
Fig. 21 schematically shows a view in perspective utility service system according the invention installed on a ceiling of a building, and
Fig. 22 schematically show a view in perspective of a third embodiment of a module according the invention

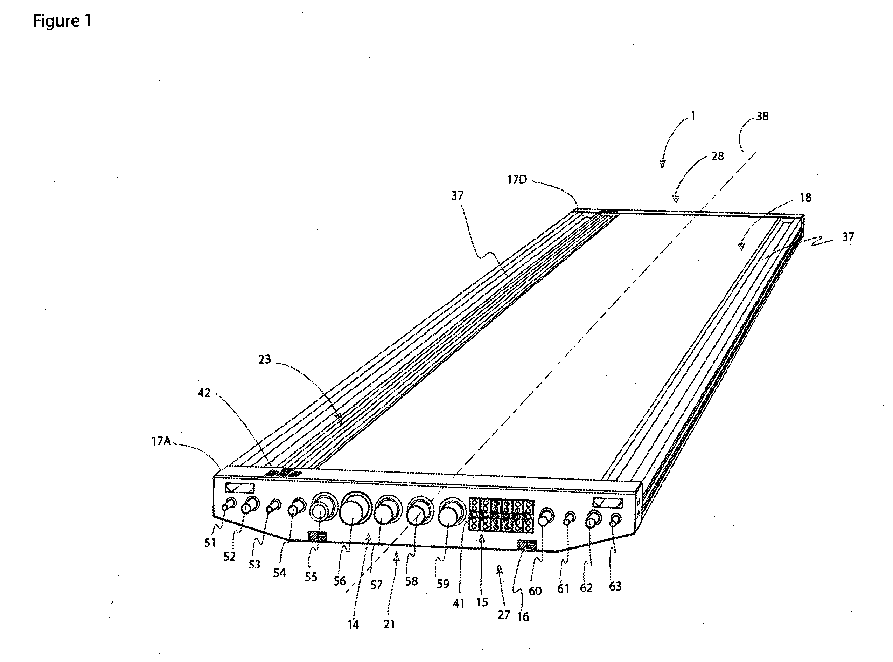

In the figures 1 - 22 equal reference numbers relate to equal or similar features.

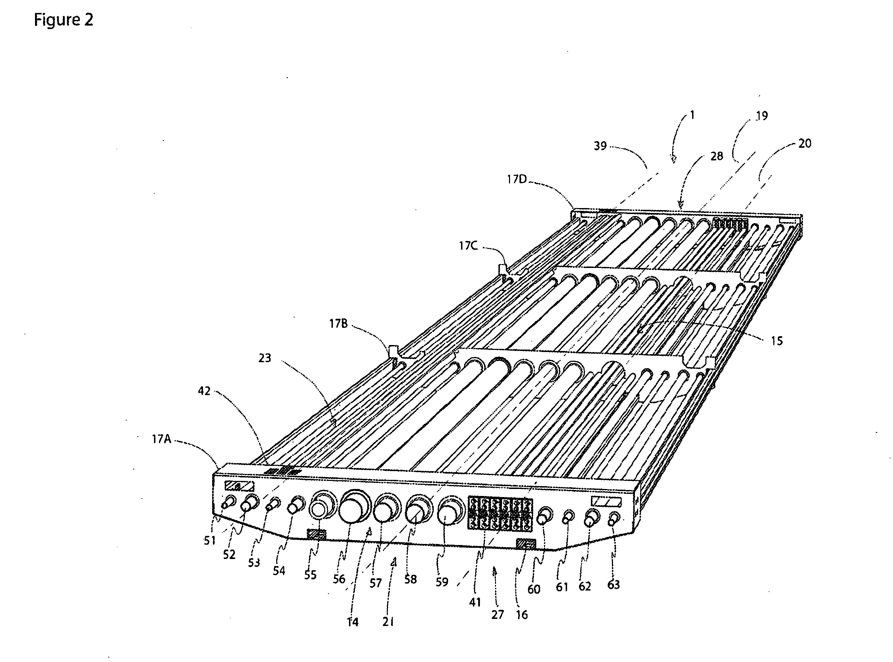

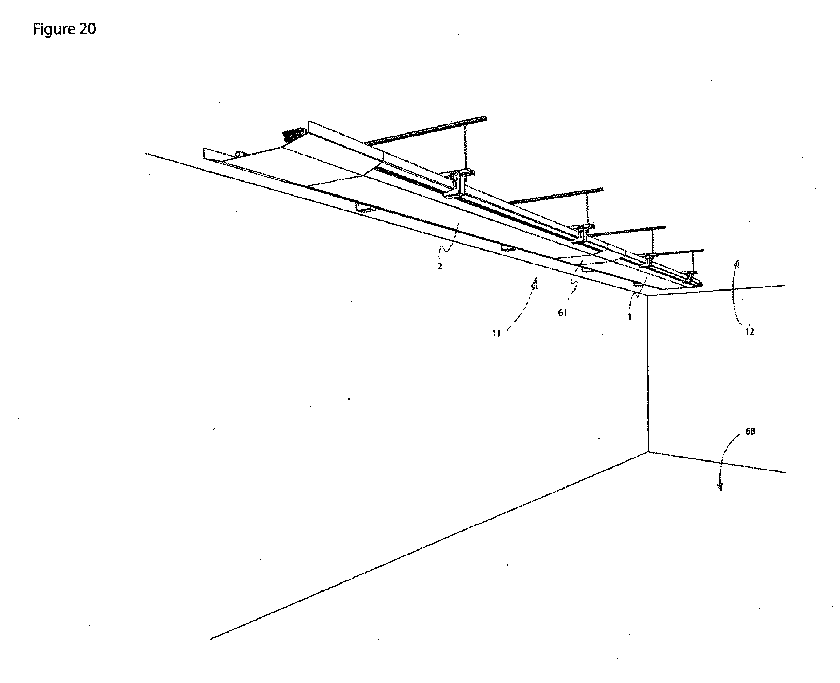

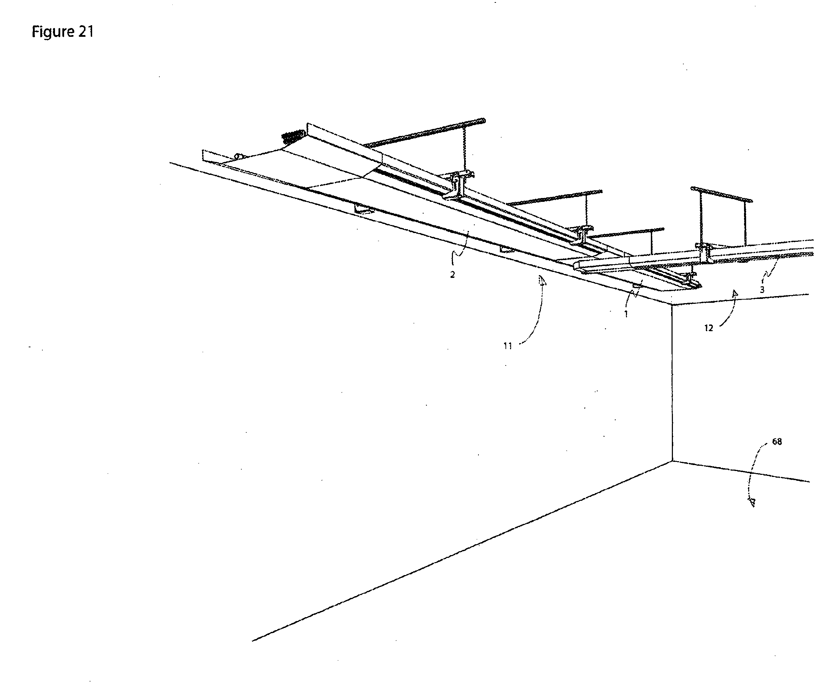

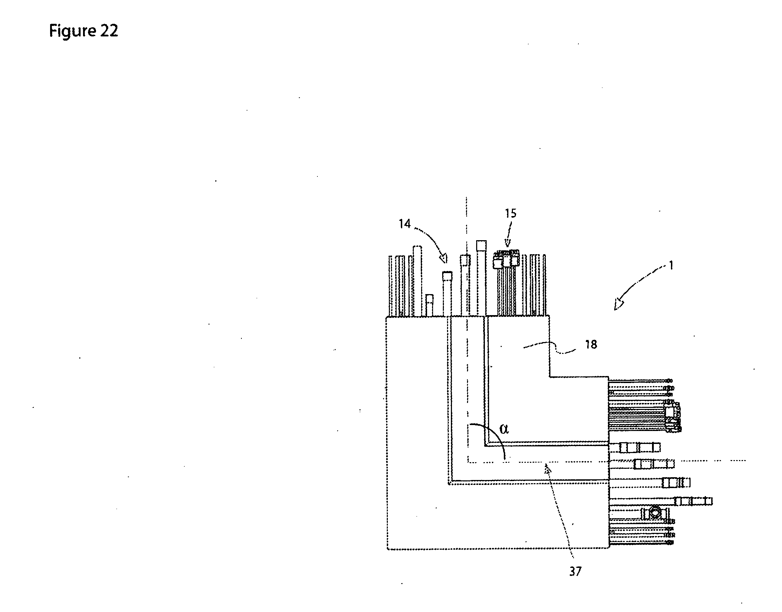

The figures 1 and 2 show an embodiment of a module according the invention. Fig. 2 provides a view on the inside of the module of fig. 1. The module 1 is configured for constructing a utility service system to be installed on a ceiling of a building (see fig. 20 and 21). The module 1 comprises a module length axis 38. In fig. 1 the module length axis 38 is a straight line. The module 1 may also have other configurations (see fig. 22).

The module 1 comprises multiple fluid ducts 14 for transporting a fluid. The fluid ducts 51-54 are configured for transporting cold fluids for an air conditioning system. The fluid duct 55 is configured for transporting gas, such as natural gas. The fluid duct 56 may function as a drain for the air conditioning system. The fluid duct 57 is configured for transporting drinking water. The fluid duct 58 and 59 are configured for transporting heated water of a heating system. The fluid ducts 60-63 are configured for transporting cold fluids for an further air conditioning system which also may be connected to drain 56. Each fluid duct 14 comprises a length axis. In fig. 2 the length axis 19 the fluid duct 58 is indicated.

The module 1 comprises several electricity lines 15 for transporting electricity and several communication lines 23 for transporting data. In fig. 2 the length axis 20 of one of the electricity lines 15 and a length axis 39 of one of the communication lines 23 are indicated.

The length axes of the fluid ducts 14, electricity lines 15 and communication lines 23 extend in the length direction of said fluid ducts 14, electricity lines 15 and communication lines 23, respectively.

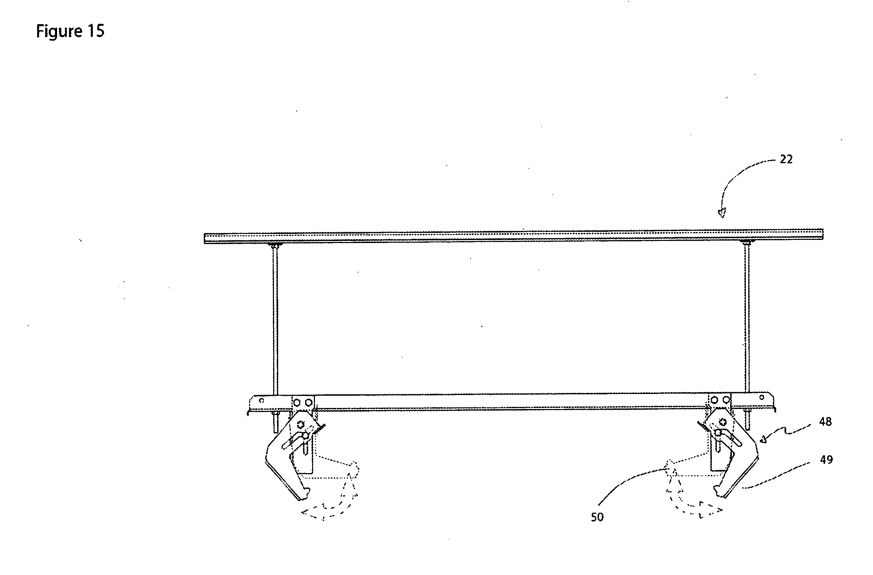

Two longitudinal supports 16 extending substantially parallel at a distance from each other are provided. The longitudinal supports 16 are located at an outer side 21 of the module 1. The longitudinal supports 16 are configured to be engaged by a holding device for attaching the module to the ceiling (see fig. 15 and 20).

The four transverse supports 17 are supported by the longitudinal supports 16 and extend substantially perpendicular thereto. One of the transverse supports 17A forms the front side 27 of the module 1. Another of the transverse supports 17D forms the back side 28 of the module 1.

The fluid ducts 14, the electricity lines 15 and the communication lines 23 extend substantially parallel to the longitudinal supports 16 and the module length axis 38 and are supported by the four transverse supports 17. The fluid ducts 14 and the electricity lines 15 are embedded in a body of thermally insulating foam 18. The fluid ducts 14 and the electricity lines 15 are embedded in the same body of thermally insulating foam 18. The body of foam 18 fully surrounds the length axes 19, 20 of the fluid ducts 14 and the electricity lines 15. The communication lines 23 are located in a recess 37 formed in the body of foam 18. Two additional recesses 37 are formed in the foam body 18. The additional recesses 37 can be used to accommodate further functional elements such as additional lines, e.g. additional electricity lines or communication lines.

The transverse supports 17 are separate from the body of foam 18. The transverse supports 17 do not form part of the body of foam 18.

Each of the longitudinal supports 16 is partly surrounded by the body of foam 18. The length axis of each longitudinal support 16 is only partly (and not fully) surrounded by the body of foam 18. Two of the transverse supports 17B, 17C are embedded in a body of thermally insulating foam 18. The body of foam 18 is connected to and located between the longitudinal supports 16.

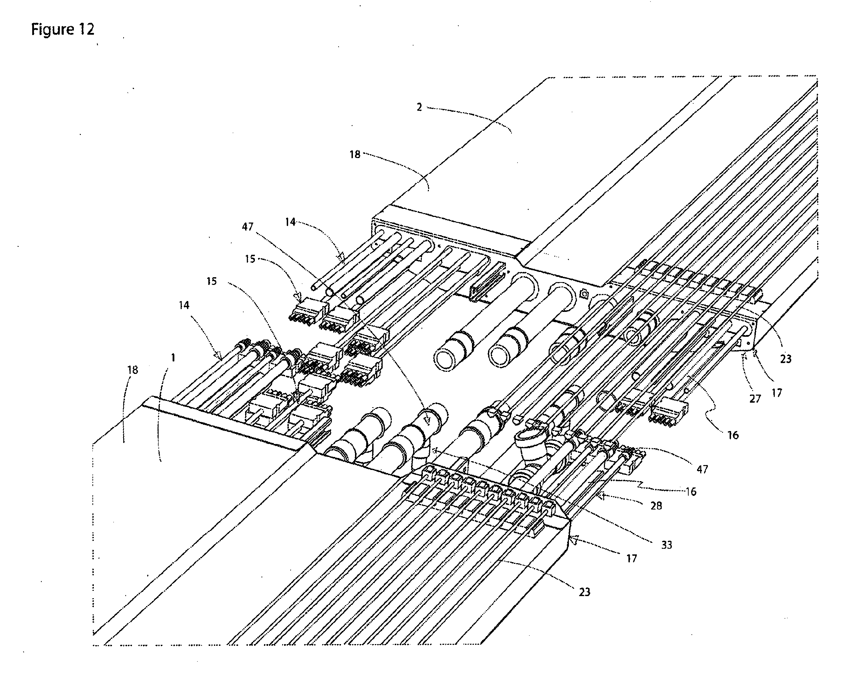

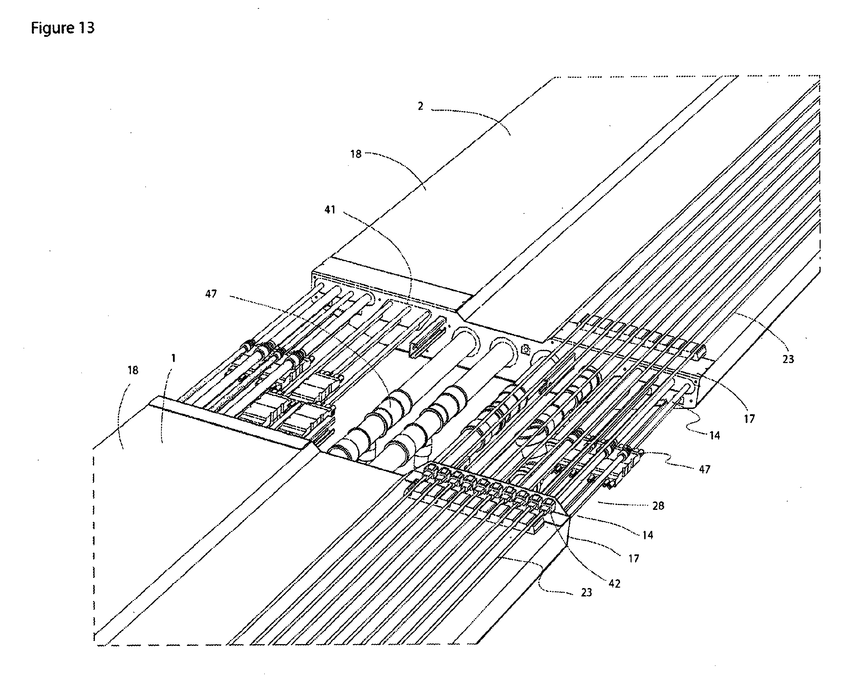

The fluid ducts 14 extend in their length direction beyond the front side 27 and the back side 28 of the module 1. These protruding parts of the fluid ducts 14 are used for connecting the fluid ducts 14 to similar fluid ducts of a neighboring module (see fig. 12 and 13).

The electricity lines 15 are at each end thereof connected to an electricity contact device 41 for connecting the electricity lines 15 to similar electricity lines of a neighboring module. The communication lines 23 are at each end thereof connected to a data contact device 42 for connecting the communication lines 23 to similar communication lines of a neighboring module. The electricity contact device 41 and the data contact device 41, 42 comprise sockets, but may comprise any other means suitable for connecting electricity lines 15 and communication lines 23, respectively.

The fluid ducts 14 of the module 1 extend in a flat plane. This provides the module 1 a flat configuration. In the module 1 of fig. 1 and 2, the electricity lines 15 extend in the same flat plane. It will be clear that other configurations are possible.

The body of foam 18 is made from polyurethane.

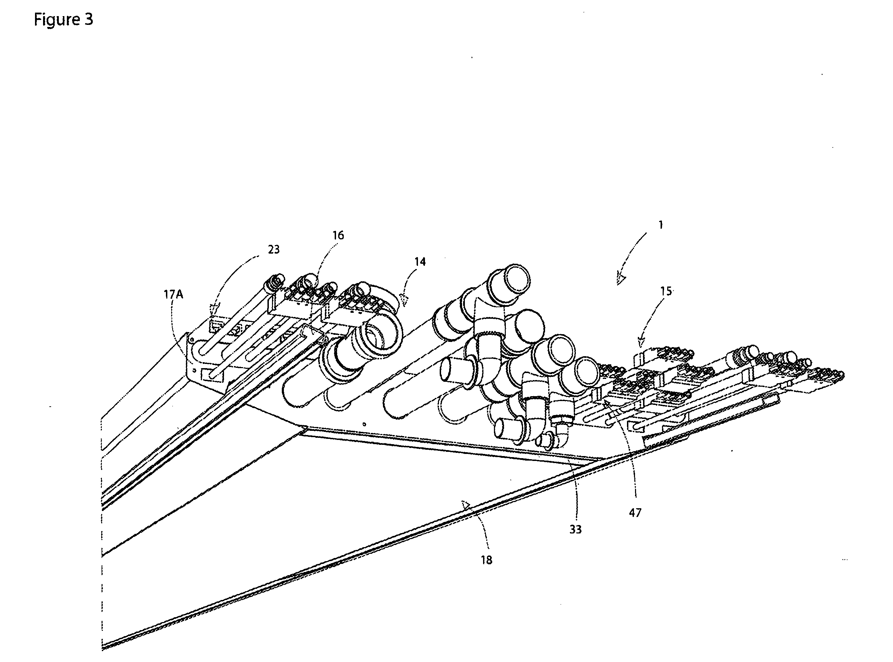

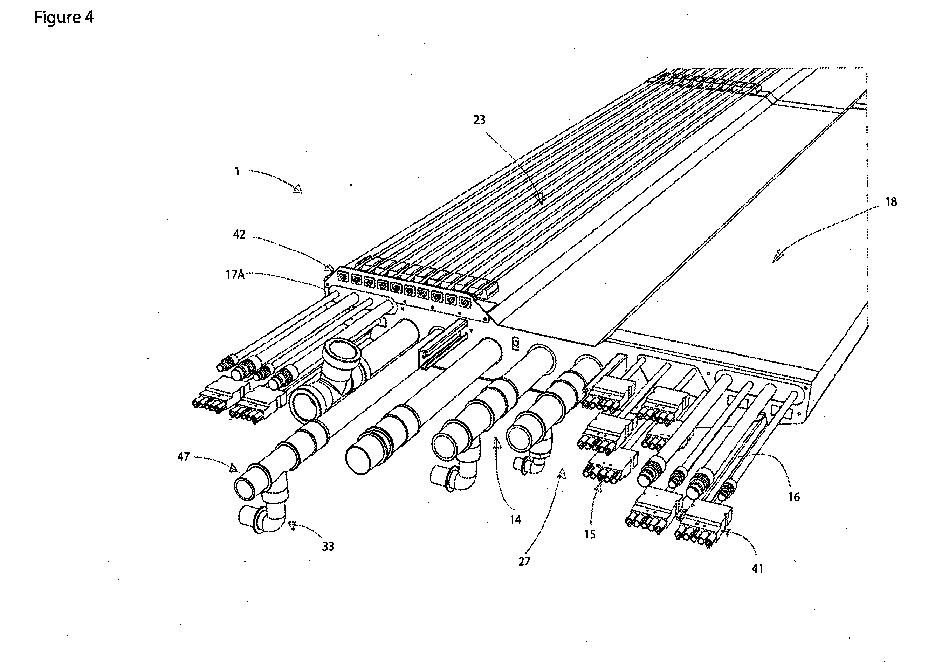

The figures 3 and 4 show a second embodiment of a module according the invention. Only the front part of the module 1 is shown. The fluid ducts 14 are provided with couplers 47 for connecting the fluid ducts 14 to fluid ducts of a neighboring module. Several couplers 47 have a branch connection 33 from transporting a fluid away from and/or to the fluid duct 14. The branch connections 33 can be used to connect a branch module to two interconnected modules (see fig. 21).

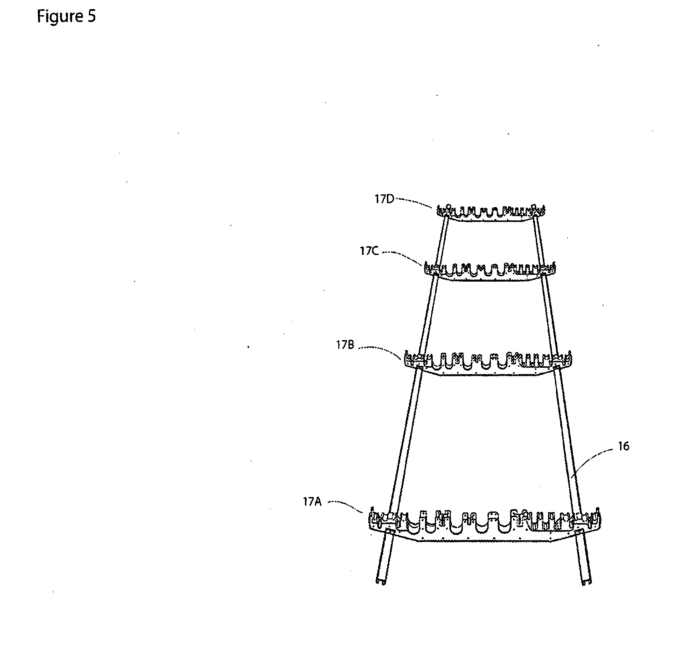

The figures 5-11 show an embodiment of a method for producing a module according the invention.

In figure 5 two longitudinal supports 16 extending substantially parallel at a distance from each other are provided. Four transverse supports 17A-D are supported by the longitudinal supports 16.

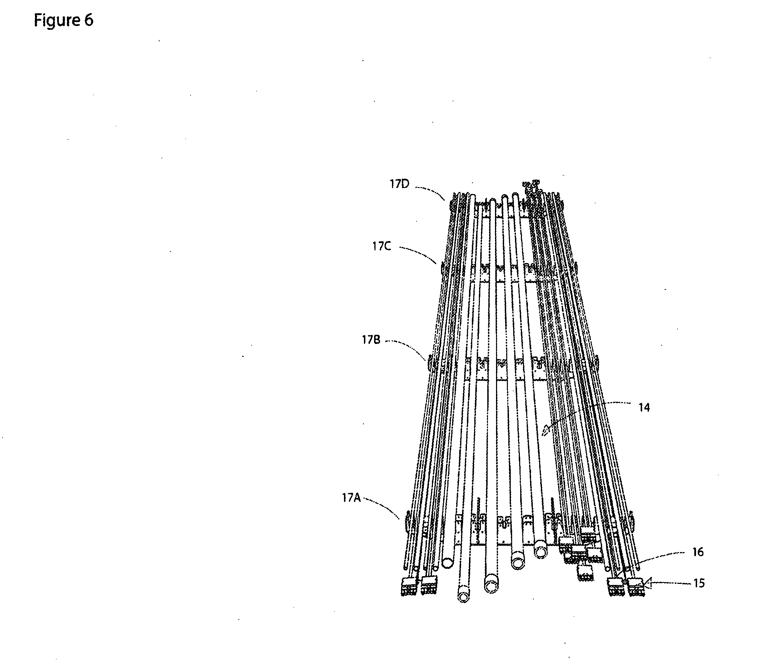

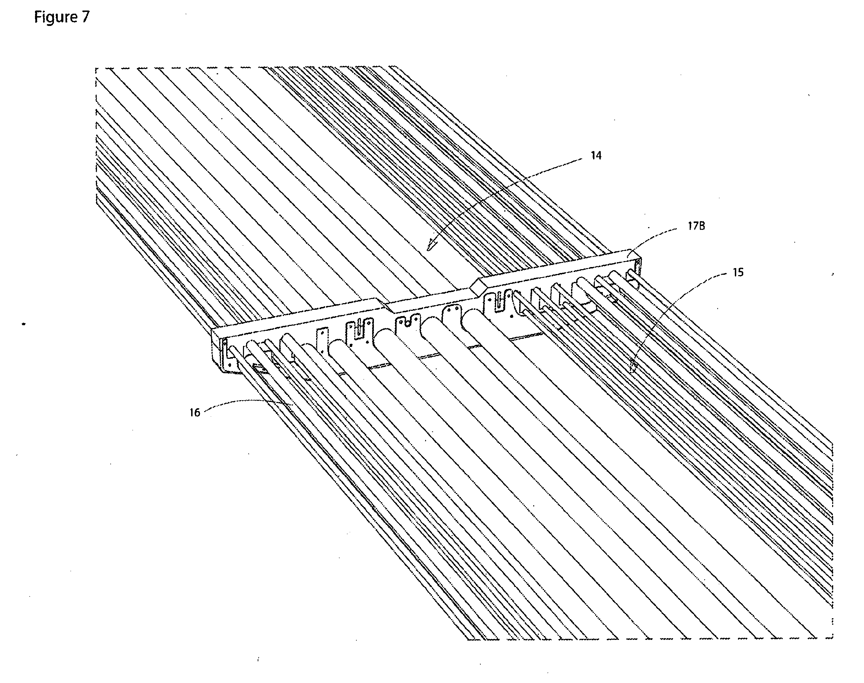

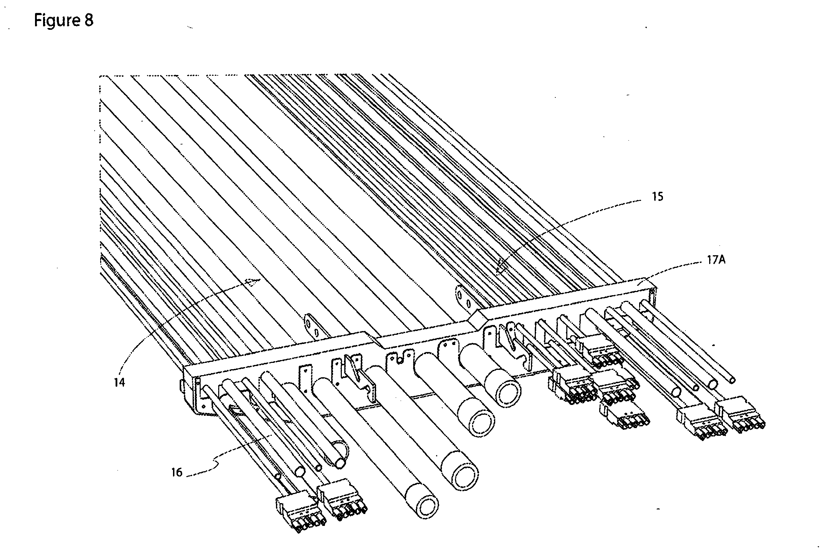

In the figures 6-8 multiple fluid ducts 14 for transporting a fluid and multiple electricity lines 15 for transporting electricity are positioned such that the fluid ducts 14 and the electricity lines 15 are supported by the transverse supports 17A-D and extend substantially parallel to the longitudinal supports 16. As shown in the figures 7 and 8, the transverse supports 17 fully enclosed the fluid ducts 14 and the electricity lines 15.

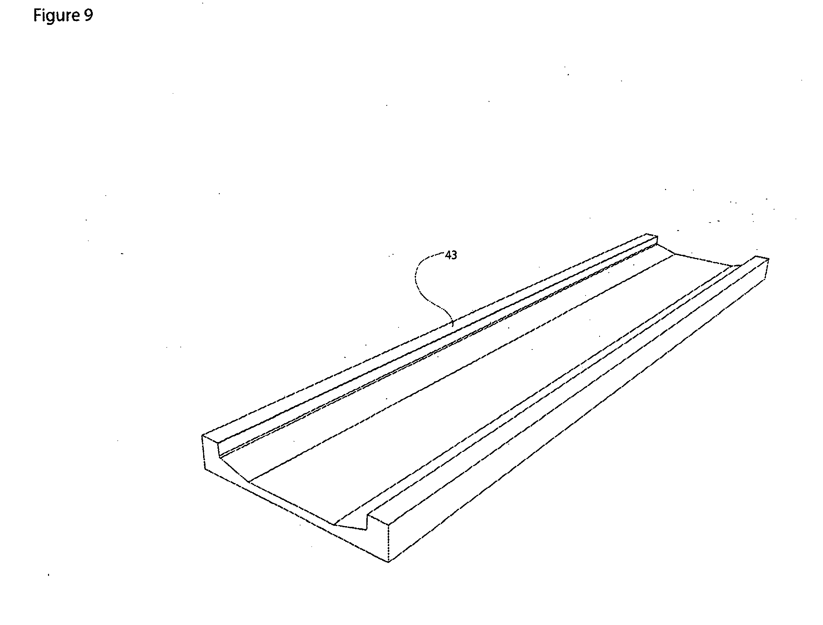

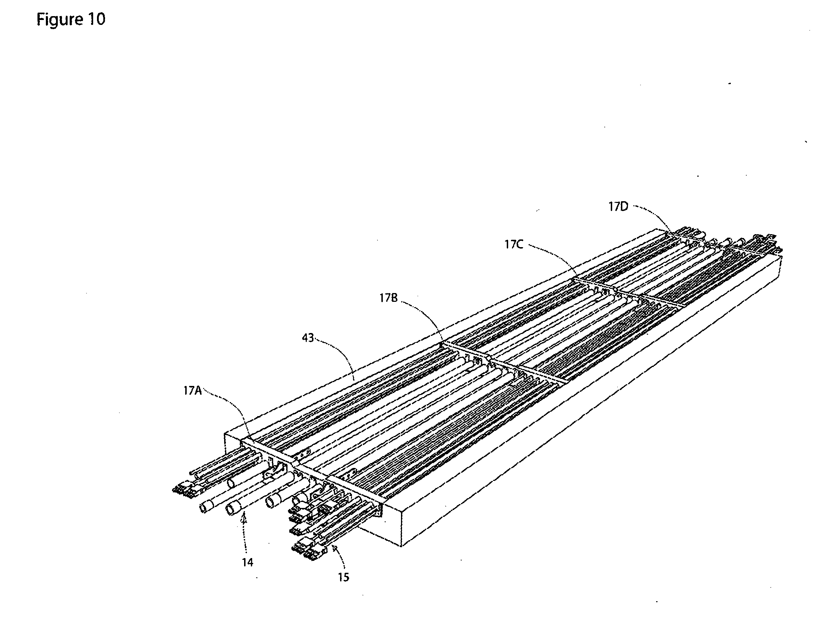

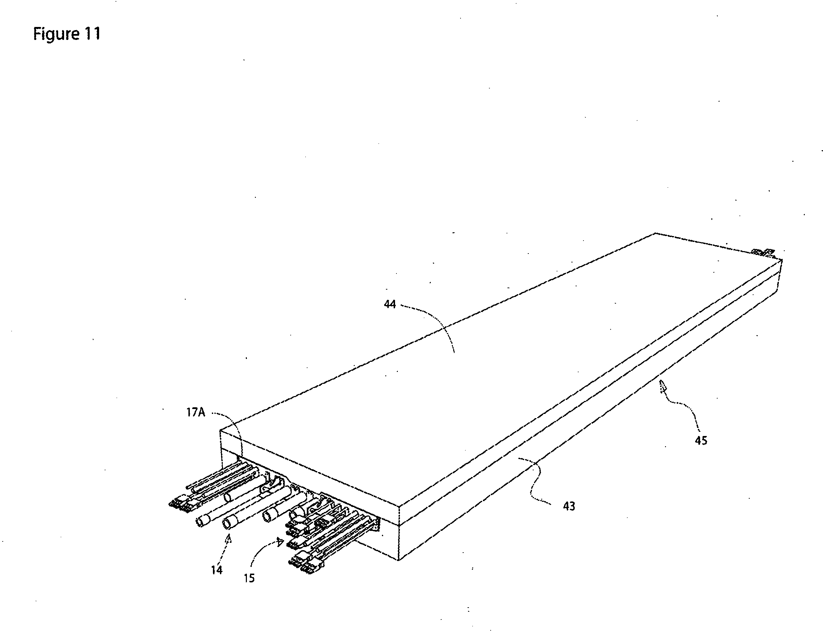

In the figures 9 and 10, a first mould part 43 is provided and the assembly of the longitudinal supports 16, the transverse supports 17, the fluid ducts 14 and the electricity lines 15 are positioned in the first mould part 43. In fig. 11, a second mould part 44 is positioned on the first mould part 43. This way a mould 45 is formed which fully surrounds the fluid ducts 14 and the electricity lines 15. The mould 45 is subsequently filled with thermally insulating foam 18 such that the fluid ducts 14 and the electricity lines 15 are embedded in a body of thermally insulating foam. The formed body of foam fully surrounds each length axis of the multiple fluid ducts 14 and the electricity lines 15.

The body of foam is formed such that it is extends between the longitudinal supports 16 and the two outer transverse supports 17A, 17D. The two outer transverse supports 17A, 17D form the front side 27 and the back side 28 of the module 1. It will be clear that communication lines can be embedded in the body of foam in the same way as is done with the electricity lines 15.

The figures 12 and 13 show a method for constructing a utility service system according the invention. Figure 12 shows a first module 1 and a second module 2. The two modules 1, 2 are identical to each other. The two modules 1, 2 are positioned in line with each other. The fluid ducts 14 of the two modules 1, 2 are aligned and located at a distance from each other. The ends of the fluid ducts 14 of the first module 1 facing the second module 2, are provide with couplers 47 for connecting the fluid ducts 14 of the first module 1 to the fluid ducts 14 of the second module 2. In fig. 13 the fluid ducts 14 of the two modules 1, 2 are connected to each other. The electricity contact devices 41 of both modules 1, 2 correspond to each other and can be connected to each other. The data contact devices 42 of both modules 1, 2 correspond to each other and can be connected to each other. The interconnected modules 1, 2 shown in fig. 13 form neighbouring modules in the utility service system.

The connections of the fluid ducts 14 and/or the electricity lines 15 and/or the communication lines 23 of the two modules 1, 2 can be covered by a cover (see fig. 20), such as a thermally insulating cover. The couplers 47 comprise branch connections 33. Via the branch connection 33, a third module forming a branch module can be interconnected with the first and second modules 1, 2 (see fig. 21). The branch connections 33 can also be covered by a cover, such as a thermally insulating cover.

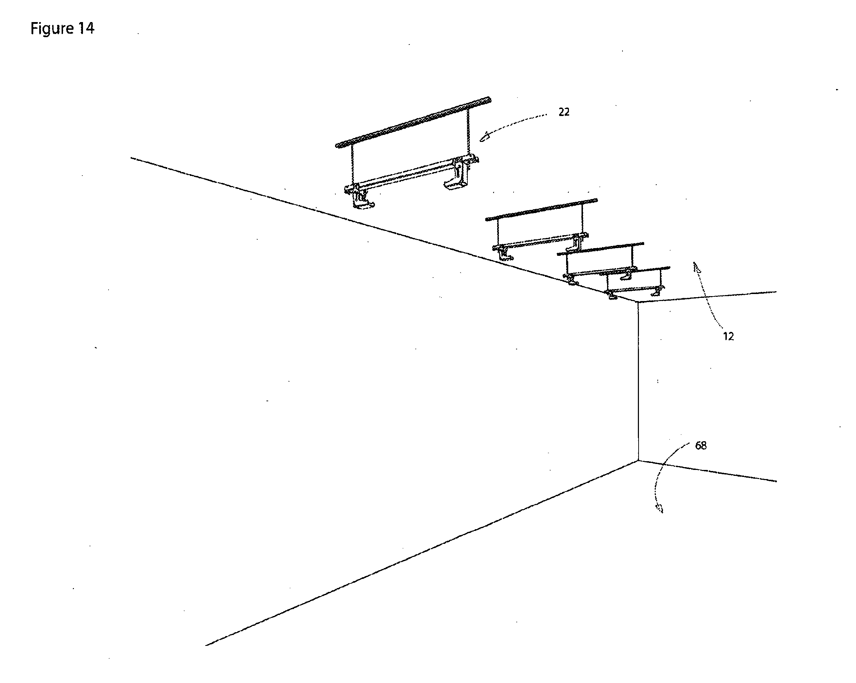

The figures 14-20 schematically show a method for installing a utility service system on a ceiling of a building.

In fig. 14 holding devices 22 are mounted on a ceiling 12 of a building. The holding devices 22 are configured to hold interconnected modules 1, 2 according to the invention. After the holding devices 22 are mounted on the ceiling 12, the holding devices 22 are aligned such that the utility service system 11 formed by interconnected modules 1, 2 extend in a substantially flat plane when held by the holding devices 22.

Fig. 15 shows one of the holding devices 22 in detail. Each of the holding devices 22 comprises a pair of movable engaging arms 48. The engaging arms 48 are movable between a non-engaging position 49 in which the holding device 22 can receive the interconnected modules 1, 2 between the engaging arms 48 and an engaging position 50 in which the engaging arms 48 engage the received interconnected modules 1, 2 such that the modules 1, 2 are held by the holding device 22. The engaging arms 48 are configured to automatically move from the non-engaging position 49 to the engaging position 50 when the interconnected modules 1, 2 are received between the engaging arms 48. A spring construction (not shown) is used for this automatic movement. When the engaging arms 48 hold interconnected modules 1, 2, said modules 1, 2 are fixated by the holding device 22.

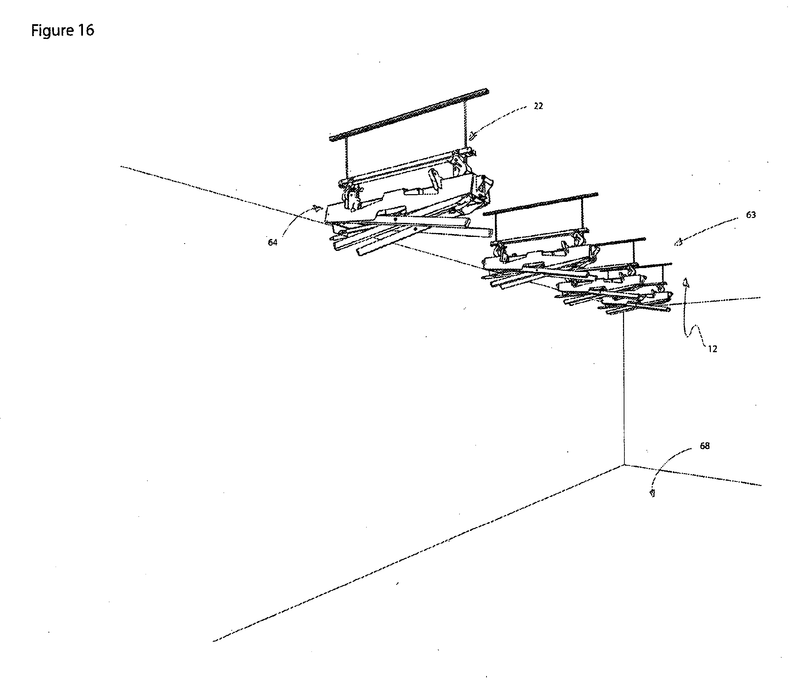

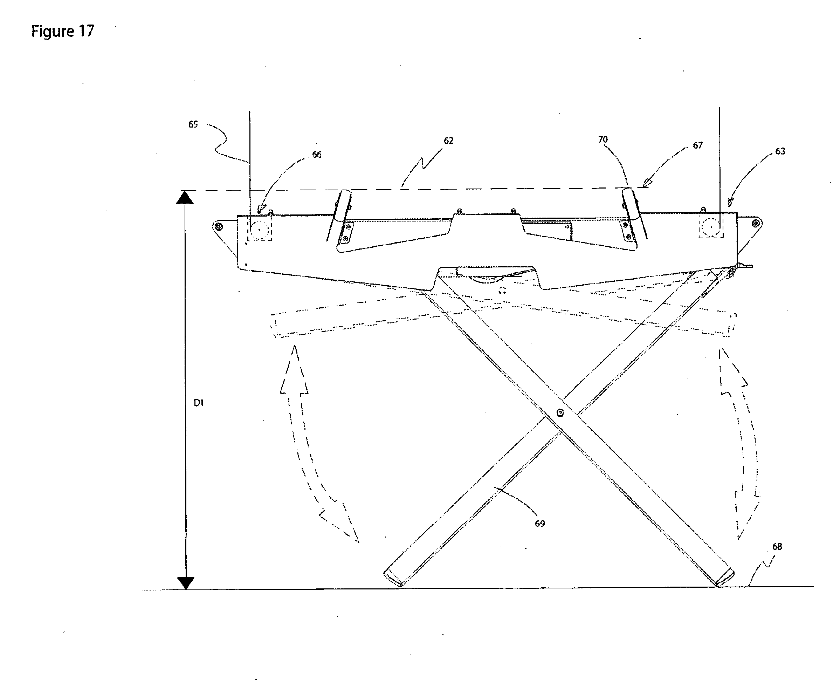

In fig. 16 and 17 a positioning system 63 is attached to the holding devices 22. The positioning system 63 comprises multiple lifting devices 64 which are attached to the holding devices 22 via lifting lines 65. Each lifting device 64 comprises support members 67 for supporting a module 1, 2. The support members 67 define a support surface 62 on which the module 1, 2 is supported. The support members 67 are formed by support rollers 70 which facilitate movement of the supported module 1, 2 relative to the lifting device 64. Each lifting device 64 is attached to one of the holding devices 22 and comprises a drivable reel 66 for reeling in and out the lifting lines 65 to move the lifting device 64 relative to the holding devices 22 to which it is attached. The drivable reels 66 are controllable by a wireless controller (not shown). It will be clear that the drivable reels 66 may be controlled by any suitable controller known in the state of the art.

In fig. 17 the lifting device 64 is positioned on the floor surface 68 of the building via unfoldable legs 69. It will be clear that similar other types of legs, such as extendable legs, may be used. The folded position of the legs 69 is shown by discontinuous lines, an unfolded position of the legs is shown by continuous lines. The support surface 62 is located at a distance D1 of around 80 cm from the floor surface 68. The position of the legs 69 is adjustable to adjust the distance D1. The position of the legs is controllable by the same wireless controller (not shown).

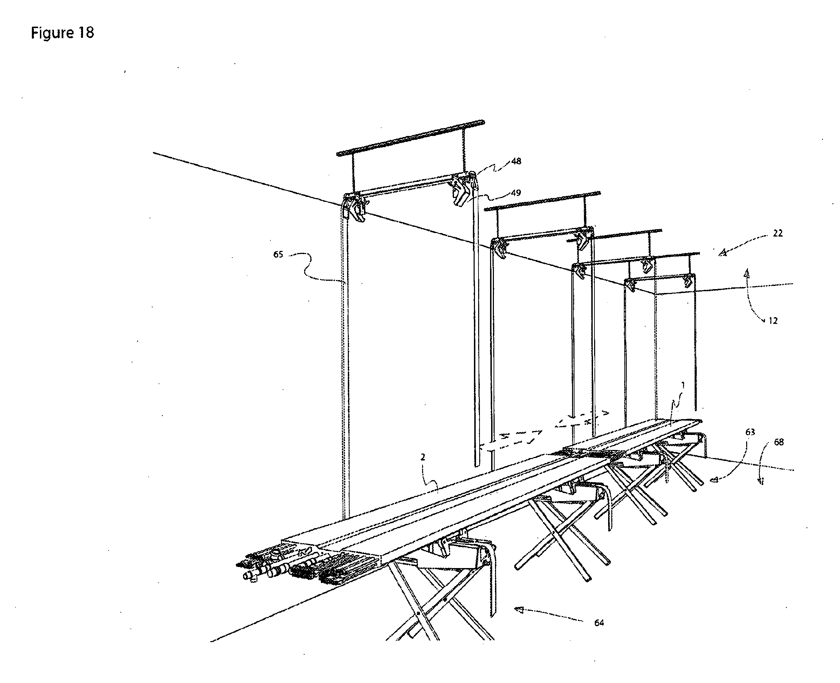

In fig. 18 the lifting devices 64 are positioned on the floor surface 68. Two modules 1, 2 are positioned on the support surfaces 62 of the lifting devices 64. This way the modules 1, 2 are fully supported by the floor surface 68 via the lifting devices 64 of the positioning system 63. In said position the modules 1, 2 are interconnected by the method shown in the fig. 12 and 13. During said method the modules 1, 2 are moved towards each other as indicated by the arrows.

Before the modules 1, 2 are placed on the lifting devices 64, one of the lifting lines 65 of each lifting device 64 is disconnected to facilitate positioning of the modules 1, 2 on the support surface 62. Before the lifting devices 64 are lifted toward the holding devices 22, the lifting lines 65 will be reconnected.

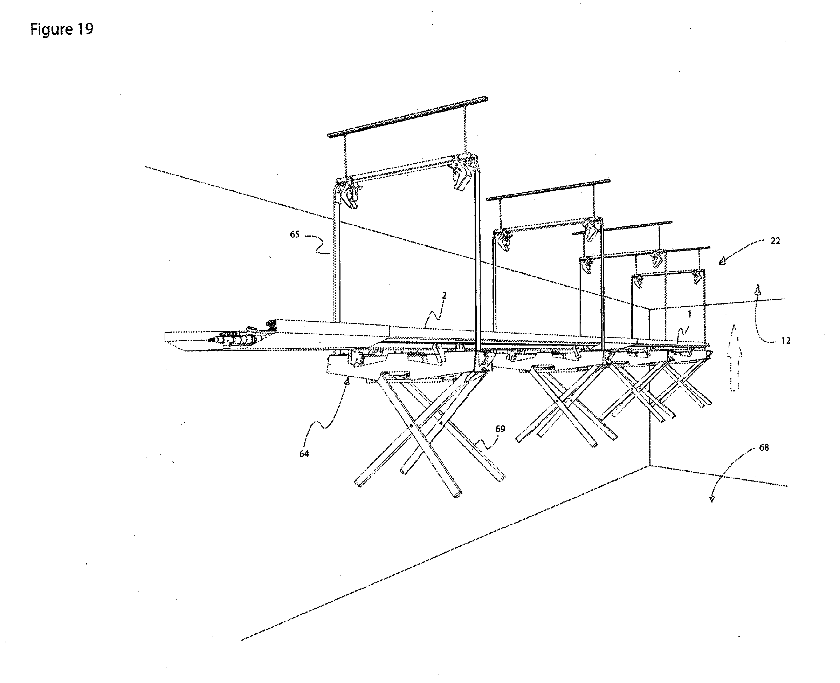

The interconnected modules 1, 2 are lifted to the holding devices 22 as shown in fig. 19. More specifically, the interconnected modules 1, 2 are hoisted to the holding devices 22. During the lifting the legs 69 may be in the folded position. The engaging arms 48 of the holding devices 22 are in their non-engaging position 49. The lifting devices 64 lift the interconnected modules 1, 2 between the engaging arms 48 such that said arm 48 are automatically moved in their engaging position 50 to hold the interconnected modules 1, 2. After that, the weight of the interconnected modules 1, 2 is transferred from the lifting devices 64 to the holding device 22. The interconnected modules 1, 2 are fully supported by the ceiling 12 via the holding devices 22. After that, the lifting devices 64 can be detached from the holding devices 22. The utility service system 11 is now installed on the ceiling 12 (fig. 20). The connections of the fluid ducts, electricity lines and communication lines of the interconnected modules 1, 2 is covered by thermally insulating cover 61.

Figure 21 shows a second embodiment of a utility service system according the invention installed on a ceiling of a building. The utility service system 11 comprises a third module 3 as a branch module.

Figure 22 shows a third embodiment of a module according the invention. The fluid ducts, electrical lines, the longitudinal supports and the communication lines embedded in the body of thermally insulating foam 18 make an angle α of substantially 90°. It will be clear that any other angle α may be possible, such as 30°, 45°, 60°, 120°, 135° and 150°.

## Claims

1. Module (1) for constructing a utility service system to be installed on a ceiling of a building, comprising;
multiple fluid ducts (14) for transporting a fluid,
two longitudinal supports (16) extending substantially parallel at a distance from each other,
at least one transverse support (17) being supported by the longitudinal supports and extending traverse to the longitudinal supports, wherein
- the multiple fluid ducts (14) extend substantially parallel to the longitudinal supports (16),
- the multiple fluid ducts (14) are supported by the at least one transverse support (17), **characterised in that**
- the multiple fluid ducts (14) are embedded in a body of thermally insulating foam (18), wherein
- the at least one transverse support (17) does not form part of the body of foam (18).

2. Module according to claim 1, wherein the at least one transverse support (17) is separate from the body of foam (18).

3. Module according to claim 1 or 2, wherein the module comprises at least one electricity line (15) for transporting electricity and the at least one electricity line extends substantially parallel to the longitudinal supports (16).

4. Module according to any of the preceding claims, wherein the multiple fluid ducts (14) are embedded in the same body of thermally insulating foam (18).

5. Module according to claim 3 or 4, wherein the at least one electricity line (15) is embedded in the body of thermally insulating foam (18).

6. Utility service system (11) comprising multiple modules (1) according to any of the preceding claims, wherein the modules (1) are interconnected.

7. Utility service system according to claim 6, wherein the fluid ducts (14) of the modules (1) are interconnected.

8. Utility service system according to claim 6 or 7, wherein the at least one electricity line (15) of the modules (1) are interconnected

9. Utility service system according to any of the claims 6-8, wherein the at least one communication line of the modules (1) are interconnected.

10. Method for producing a module (1) for constructing a utility service system to be installed on a ceiling of a building, comprising the steps of;
- providing two longitudinal supports (16) extending substantially parallel at a distance from each other,
- placing at least one transverse support (17) in contact with the longitudinal supports such that the at least one transverse support is supported by the longitudinal supports and extends traverse to the longitudinal supports,
- placing multiple fluid ducts (14) for transporting a fluid in contact with the at least one transverse support (17) such that the fluid ducts supported by the at least one transverse support (17) and extend substantially parallel to the two longitudinal supports (16),
- embedding the multiple fluid ducts (14) in a body of thermally insulating foam (18), wherein the at least one transverse support (17) does not form part of the body of foam (18).

11. Method according to claim 10, wherein the provided at least one transverse support is separate from the body of foam (18).

12. Method according to claim 10 or 11, wherein the method comprises embedding the multiple fluid ducts (14) in the same body of thermally insulating foam (18).

13. Method according to any of the claims 10-12, wherein the method comprises embedding at least one electricity line (15) for transporting electricity in the body of thermally insulating foam (18).

14. Method for installing a utility service system on a ceiling of a building comprising the steps of;
- providing multiple modules (1) according to any of the claims 1-5,
- mounting holding devices (22) on the ceiling (12), which holding devices are configured to hold interconnected modules,
- interconnecting the modules (1) while the modules are supported by a floor surface (68) of the building,
- lifting the interconnected modules (1) to the holding devices, and
- engaging the interconnected modules (1) with the holding devices such that the interconnected modules (1) are attached to the ceiling.

15. Use of a module (1) according to any of the claims 1-5.

## Patentansprüche

1. Modul (1) zum Aufbau einer Versorgungsbetriebsanlage, die an einer Decke eines Gebäudes installiert wird, umfassend; mehrere Flüssigkeitsrohre (14) zum Transportieren einer Flüssigkeit,
zwei Längsträger (16), die sich im Wesentlichen parallel in einem Abstand zueinander erstrecken,
mindestens einen Querträger (17), der von den Längsträgern getragen wird und sich quer zu den Längsträgern erstreckt, wobei
- sich die mehreren Flüssigkeitsrohre (14) im Wesentlichen parallel zu den Längsträgern (16) erstrecken,
- die mehreren Flüssigkeitsrohre (14) durch den mindestens einen Querträger (17) getragen werden, **dadurch gekennzeichnet, dass**
- die mehreren Flüssigkeitsrohre (14) in einem wärmedämmenden Schaumstoffblock (18) eingebettet sind, wobei
- der mindestens eine Längsträger (17) nicht Bestandteil des Schaumstoffblocks (18) ist.

2. Modul nach Anspruch 1, wobei der mindestens eine Querträger (17) von dem Schaumstoffblock (18) getrennt ist.

3. Modul nach Anspruch 1 oder 2, wobei das Modul mindestens eine Stromleitung (15) zum Stromtransport umfasst und wobei sich die mindestens eine Stromleitung im Wesentlichen parallel zu den Längsträgern (16) erstreckt.

4. Modul nach einem der vorhergehenden Ansprüche, wobei die mehreren Flüssigkeitsrohre (14) in demselben wärmedämmenden Schaumstoffblock (18) eingebettet sind.

5. Modul nach Anspruch 3 oder 4, wobei die mindestens eine Stromleitung (15) in dem wärmedämmenden Schaumstoffblock (18) eingebettet ist.

6. Versorgungsbetriebsanlage (11), die mehrere Module (1) nach einem der vorhergehenden Ansprüche umfasst, wobei die Module (1) miteinander verbunden sind.

7. Versorgungsbetriebsanlage nach Anspruch 6, wobei die Flüssigkeitsrohre (14) der Module (1) miteinander verbunden sind.

8. Versorgungsbetriebsanlage nach Anspruch 6 oder 7, wobei mindestens eine der Stromleitungen (15) der Module (1) miteinander verbunden sind.

9. Versorgungsbetriebsanlage nach einem der Ansprüche 6-8, wobei mindestens eine der Kommunikationsleitungen der Module (1) miteinander verbunden sind.

10. Verfahren zur Erzeugung eines Moduls (1) zum Aufbau einer Versorgungsbetriebsanlage, die an einer Decke eines Gebäudes installiert wird, welches die Schritte aufweist;
- Bereitstellen von zwei Längsträgern (16), die sich im Wesentlichen parallel in einem Abstand zueinander erstrecken,
- Platzieren mindestens eines Querträgers (17) im Kontakt mit den Längsträgern, so dass mindestens ein Querträger durch die Längsträger getragen wird und sich quer zu den Längsträgern erstreckt,
- Platzieren mehrerer Flüssigkeitsrohre (14) zum Transportieren einer Flüssigkeit im Kontakt mit dem mindestens einen Querträger (17), so dass die Flüssigkeitsrohre durch den zumindest einen Querträger (17) getragen werden und sich im Wesentlichen parallel zu den zwei Längsträgern (16) erstrecken,
- Einbetten der mehreren Flüssigkeitsrohre (14) in einen wärmedämmenden Schaumstoffblock (18), wobei der mindestens eine Längsträger (17) nicht Bestandteil des Schaumstoffblocks (18) ist.

11. Verfahren nach Anspruch 10, wobei der mindestens eine bereitgestellte Querträger von dem Schaumstoffblock (18) getrennt ist.

12. Verfahren nach Anspruch 10 oder 11, wobei das Verfahren das Einbetten der mehreren Flüssigkeitsrohre (14) in denselben wärmedämmenden Schaumstoffblock (18) umfasst.

13. Verfahren nach einem der Ansprüche 10-12, wobei das Verfahren das Einbetten der mindestens einen Stromleitung (15) zum Stromtransport in den wärmedämmenden Schaumstoffblock (18) umfasst.

14. Verfahren zur Installation einer Versorgungsbetriebsanlage an der Decke eines Gebäudes, welches die Schritte aufweist;
- Bereitstellen mehrerer Module (1) nach einem der Ansprüche 1-5,
- Montieren von Haltevorrichtungen (22) an der Decke (12), wobei die Haltevorrichtungen eingerichtet sind, miteinander verbundene Module zu halten,
- Verbinden der Module (1) während die Module von einer Bodenfläche (68) des Gebäudes gehalten werden,
- Heben der miteinander verbundenen Module (1) zu den Haltevorrichtungen, und
- Ineingriffbringen der miteinander verbundenen Module (1) mit den Haltevorrichtungen, so dass die miteinander verbundenen Module (1) an der Decke befestigt sind.

15. Verwenden eines Moduls (1) nach einem der Ansprüche 1-5.

## Revendications

1. Module (1) pour construire un système de services d'utilité à installer sur un plafond d'un bâtiment, comprenant:
plusieurs conduits de fluide (14) pour transporter un fluide,
deux supports longitudinaux (16) s'étendant sensiblement parallèlement à une distance l'un de l'autre,
au moins un support transversal (17) qui est supporté par des supports longitudinaux et s'étendant transversalement par rapport aux supports longitudinaux, dans lequel :
la pluralité de conduits de fluide (14) s'étendent parallèlement aux supports longitudinaux (16),
la pluralité de conduits de fluide (14) sont supportés par le au moins un support transversal (17), **caractérisé en ce que**:
la pluralité de conduits de fluide (14) sont encastrés dans un corps de mousse thermiquement isolante (18), dans lequel :
le au moins un support transversal (17) ne fait pas partie du corps de mousse (18).

2. Module selon la revendication 1, dans lequel le au moins un support transversal (17) est séparé du corps de mousse (18).

3. Module selon la revendication 1 ou 2, dans lequel le module comprend au moins une ligne électrique (15) pour transporter l'électricité et la au moins une ligne électrique s'étend sensiblement parallèlement aux supports longitudinaux (16).

4. Module selon l'une quelconque des revendications précédentes, dans lequel la pluralité de conduits de fluide (14) sont encastrés dans le même corps de mousse thermiquement isolante (18).

5. Module selon la revendication 3 ou 4, dans lequel la au moins une ligne électrique (15) est encastrée dans le corps de mousse thermiquement isolante (18).

6. Système de services d'utilité (11) comprenant plusieurs modules (1) selon l'une quelconque des revendications précédentes, dans lequel les modules (1) sont interconnectés.

7. Système de services d'utilité selon la revendication 6, dans lequel les conduits de fluide (14) des modules (1) sont interconnectés.

8. Système de services d'utilité selon la revendication 6 ou 7, dans lequel la au moins une ligne électrique (15) des modules (1) est interconnectée.

9. Système de services d'utilité selon l'une quelconque des revendications 6 à 8, dans lequel la au moins une ligne de communication des modules (1) est interconnectée.

10. Procédé pour produire un module (1) pour construire un système de services d'utilité à installer sur un plafond d'un bâtiment, comprenant les étapes consistant à :
prévoir deux supports longitudinaux (16) s'étendant de manière sensiblement parallèle à une distance l'un de l'autre,
placer au moins un support transversal (17) en contact avec les supports longitudinaux de sorte que le au moins un support transversal est supporté par les supports longitudinaux et s'étend transversalement par rapport aux supports longitudinaux,
placer plusieurs conduits de fluide (14) pour transporter un fluide, en contact avec le au moins un support transversal (17) de sorte que les conduits de fluide sont supportés par le au moins un support transversal (17) et s'étendent sensiblement parallèlement aux deux supports longitudinaux (16),
encastrer la pluralité de conduits de fluide (14) dans un corps de mousse thermiquement isolante (18), dans lequel le au moins un support transversal (17) ne fait pas partie du corps de mousse (18).

11. Procédé selon la revendication 10, dans lequel le au moins un support transversal prévu est séparé du corps de mousse (18).

12. Procédé selon la revendication 10 ou 11, dans lequel le procédé comprend l'étape consistant à encastrer la pluralité de conduits de fluide (14) dans le même corps de mousse thermiquement isolante (18).

13. Procédé selon l'une quelconque des revendications 10 à 12, dans lequel le procédé comprend l'étape consistant à encastrer au moins une ligne électrique (15) pour transporter l'électricité dans le corps de mousse thermiquement isolante (18).

14. Procédé pour installer un système de services d'utilité sur un plafond d'un bâtiment comprenant les étapes consistant à :
prévoir plusieurs modules (1) selon l'une quelconque des revendications 1 à 5,
monter des dispositifs de support (22) sur le plafond (12), lesquels dispositifs de support sont configurés pour maintenir les modules interconnectés,
interconnecter les modules (1) alors que les modules sont supportés par une surface de plancher (68) du bâtiment,
lever les modules (1) interconnectés jusqu'aux dispositifs de support, et
mettre en prise les modules interconnectés (1) avec les dispositifs de support de sorte que les modules interconnectés (1) sont fixés sur le plafond.

15. Utilisation d'un module (1) selon l'une quelconque des revendications 1 à 5.
